# EUROPÄISCHE PATENTSCHRIFT

(11) **EP 3 282 162 B1**
(45) Veröffentlichungstag und Bekanntmachung des Hinweises auf die Patenterteilung: **25.12.2019**
(21) Anmeldenummer: 17001308.0
(22) Anmeldetag: 31.07.2017
(51) Int. Cl.: B29C 48/00, F16L 11/00

(54) **FAHRZEUGLEITUNGSSCHUTZSCHLAUCH UND HERSTELLUNGSVERFAHREN**
VEHICLE LINE PROTECTION HOSE AND PRODUCTION PROCESS
GAINE DE PROTECTION ET DE GUIDAGE POUR UN VÉHICULE ET PROCÉDÉ DE PRODUCTION

(30) Priorität: 13.08.2016 DE 102016010027
(43) Veröffentlichungstag der Anmeldung: 14.02.2018
(73) Patentinhaber: AUDI AG, 85045 Ingolstadt (DE)
(72) Erfinder: Micko, Stefan, 85114 Buxheim (DE)

(56) Entgegenhaltungen:
- DE-T2- 69 120 286
- DE-U1-202007 014 384

## Beschreibung

Die Erfindung betrifft einen Fahrzeugleitungsschutzschlauch für zum Leiten von Fluiden vorgesehene Fahrzeugleitungen, umfassend einen unter Temperatureinwirkung durchmesserstabilen flexiblen Hüllschlauch aus Aramid zur Anordnung um eine Fahrzeugleitung, ein an dessen radialer Innenseite vorgesehenes kompaktes thermisches Isolationsmittel, wobei das kompakte thermische Isolationsmittel durch Wärmeeinwirkung aufgeschäumt werden kann.

Es ist allgemein bekannt, dass in konventionellen Fahrzeugen beziehungsweise in konventionellen PKW mit Verbrennungsmotor beispielsweise im Kühlmittelbereich keine wärmeisolierten Fahrzeugleitungen eingesetzt werden, durch welche eine Wärmeabgabe eines durch eine jeweilige Fahrzeugleitung geführten Fluids an die Umgebung maßgeblich vermindert wäre. Begründet durch die baulich gegebenen Randbedingungen im Fahrzeug beziehungsweise PKW sind jedoch nachfolgend genannte Schutzmaßnahmen Stand der Technik:
- die eingesetzten Fahrzeugleitungen sind zum Teil mit einem Scheuerschutz versehen, der eine Beschädigung der Fahrzeugleitungen bei einer Anlage an anderen Bauteilen in Verbindung mit einer Relativbewegung beider betroffenen Bauteile zueinander unterbinden soll.
- die Fahrzeugleitungen sind zum Teil mit einem Hitzeschutz versehen, der gegen die Einwirkung äußerer Wärmequellen schützen soll.

Die Fahrzeugleitungen gemäß dem Stand der Technik lassen somit eine Wärmeabgabe eines darin geführten Fluids an die Umgebung in nennenswerter Größenordnung zu. Dies ist aufgrund der durch einen konventionellen Verbrennungsmotor beim Betrieb des Fahrzeugs ohnehin entstehenden Abwärme nicht kritisch.

Es ist auch bekannt, dass Fahrzeuge mit Elektromotorantrieb gegenüber Fahrzeugen mit Verbrennungsmotorantrieb deutliche Vorteile aufweisen, so beispielsweise auch eine deutlich erhöhte Energieeffizienz. Deshalb fällt beim Betrieb eines Elektrofahrzeugs betriebsmäßig nur ein unwesentlicher Bruchteil an Abwärme im Vergleich zu einem mit Verbrennungsmotor betriebenem Fahrzeug an.

Elektrofahrzeuge weisen als Energiespeicher typischerweise Batterien auf, wobei die Reichweite eines Elektrofahrzeugs durch die Ladekapazität seiner Batterien begrenzt ist, die ihrerseits einen erheblichen Volumen- und Gewichtsanteil des Elektrofahrzeugs ausmachen.

Deshalb wirkt sich die bei mit konventionellen Verbrennungsmotoren betriebenen Fahrzeugen übliche und hinnehmbare Wärmeabgabe über Fluid führende Fahrzeugleitungen an die Umgebung bei batteriebetriebenen Elektrofahrzeugen sehr nachteilig aus. Die Heizung des Fahrgastraums eines batteriebetriebenen Fahrzeugs beispielsweise erfolgt typischerweise über ein elektrisch betriebenes Heizelement, welches in einem Fahrzeugleitungen umfassenden Fluidkreislauf befindlich ist. Somit ist jede Wärmeabgabe über die betreffenden Fahrzeugleitungen an die Umgebung bei entsprechenden klimatischen Randbedingungen gleichbedeutend mit einer reichweitenreduzierenden zusätzlichen Belastung der Batterien, da zusätzliche Heizenergie benötigt wird.

Die DE 691 20 286 T2 offenbart ein Verfahren zum Verbinden von Rohrleitungen. Demgemäß wird ein separater wärmerückstellbarer Gegenstand um eine Klebstoffzusammensetzung gelegt, die selbst um zwei zu verbindende Rohrenden positioniert oder gewickelt ist. Wenn der externe wärmerückstellbare Gegenstand schrumpft, dient er dazu, die Klebstoffzusammensetzung gegen die Rohrenden zu pressen, die ungehärtete Klebstoffzusammensetzung wird erwärmt und härtet, so daß dadurch eine lecksichere Rohrverbindung gebildet wird.

Die DE 20 2007 014384 U1 offenbart eine Schlauchanordnung bestehend aus einem inneren Hochdruckschlauch mit einer einen Hohlraum zur Durchleitung eines flüssigen oder gasförmigen Mediums umschließenden Innenschicht, einem äußeren darauf aufgebrachten Druckträger und einer außen den Druckträger umschließenden Außenschicht und aus einem den inneren Hochdruckschlauch mit einem Abstand umschließenden äußeren Schutzschlauch, bei welchem der äußere Schutzschlauch als Extrusionskörper ausgebildet und unter Einbeziehung wenigstens eines einen Ringraum zwischen der Außenschicht des inneren Hochdruckschlauches und dem äußeren Schutzschlauch definierenden Abstandhalters über den inneren Hochdruckschlauch extrudiert ist.

Ausgehend von diesem Stand der Technik ist es Aufgabe der Erfindung, einen thermischen Schutz für Fluid führende Fahrzeugleitungen anzugeben, welcher möglichst einfach zu montieren ist.

Diese Aufgabe wird gelöst durch einen Fahrzeugleitungsschutzschlauch der eingangs genannten Art mit den Merkmalen des Anspruchs 1. Dieser ist dadurch gekennzeichnet, dass die Temperatur, welcher der flexible Hüllschlauch widerstehen kann, größer ist als die Aufschäumtemperatur des Isolationsmittels.

Die Grundidee der Erfindung besteht darin, die Fahrzeugleitungen mit einem Fahrzeugleitungsschutzschlauch mit Wärmeisolation und integriertem Scheuerschutz zu umhüllen, welcher einfach über die zu schützende Fahrzeugleitung geschoben werden kann.

Eine Wärmeisolation einerseits, wie sie beispielsweise bei Heizungsleitungen in Gebäuden bekannt ist, umfasst ein thermisches Isolationsmittel, welches die zu isolierende Leitung eng umhüllt. Eine derartige Umhüllung von Fahrzeugleitungen ist andererseits mit einem hohen Montageaufwand verbunden, wobei ein einfaches Überschieben eines entsprechenden Schutzschlauches mit thermischer Isolation aufgrund der notwendigen engen Umhüllung durch das Isolationsmittel gerade nicht möglich ist, insbesondere bei einem gewinkelten Verlauf der zu schützenden Fahrzeugleitung.

Erfindungsgemäß ist es daher an der radialen Innenseite des Hüllschlauches ein kompaktes thermisches Isolationsmittel vorgesehen, welches durch Wärmeeinwirkung aufgeschäumt werden kann. Das kompakte Isolationsmittel kann beispielsweise als homogene Beschichtung aufgebracht sein. Die Art und das Volumen des kompakten thermischen Isolationsmittels sind idealerweise derart ausgestaltet, dass in dessen aufgeschäumten Zustand der Raum zwischen der Fahrzeugleitung und dem diese umhüllenden Hüllschlauch vollständig ausgefüllt ist. Somit ist es einerseits möglich, einen erfindungsgemäßen Fahrzeugleitungsschutzschlauch in seinem unaufgeschäumten Grundzustand aufgrund des noch geringen Volumens des kompakten thermischen Isolationsmittels problemlos über eine zu schützende Fahrzeugleitung zu schieben und durch nachträgliches Aufschäumen des Isolationsmittels eine enge Umhüllung der Fahrzeugleitung mit dem Isolationsmittel zu erreichen. Durch die typischerweise auf wenige Meter begrenzte Länge eines Fahrzeugs sind die Abmessungen der Fahrzeugleitungen so limitiert, dass diese problemlos beispielsweise in einem Ofen erhitzt werden können, um das Aufschäumen zu initiieren.

Ein typischer Durchmesser eines Fahrzeugleitungsschutzschlauches kann im Bereich von -15 mm bis -48 mm liegen, wobei das geschäumte Material in etwa die Dichte eines handelsüblichen EPDM Schaums haben sollte. EPDM stellt darüber hinaus auch ein geeignetes Isolationsmaterial dar.

Idealerweise liegt die Aufschäumtemperatur im Bereich der Verarbeitungstemperatur der seither verwendeten aufgeschrumpften Scheuerschutzschläuche, beispielsweise im Bereich > 110°C, wie es beim Produkt HFT5000 des Herstellers Raychem der Fall ist. Hier liegt die Wärmeofentemperatur üblicherweise im Bereich von >200°C, wobei eine entsprechende Durchlaufzeit so zu wählen ist, dass eine oberflächliche Erwärmung des Schrumpfschlauchs erfolgt. Da das Schäumen typischerweise auch zugleich mit einer Vulkanisation einhergeht, kann auch ein Temperaturbereich von ∼140...180°C erforderlich sein. Der Hüllschlauch sollte derartigen Temperaturen in jedem Fall widerstehen können. Erfindungsgemäß erweist sich daher für das Aufschäumen ein Temperaturbereich von >110°C und <∼140°C als besonders sinnvoll. In vorteilhafter Weise ist durch einen erfindungsgemäßen Fahrzeugleitungsschutzschlauch ein vergleichsweise einfacher Prozess beim Aufbringen der thermischen Isolation auf eine Fahrzeugleitung ermöglicht. Der bauraumbedingt ohnehin erforderliche Scheuerschutz für eine Fahrzeugleitung ist integraler Bestandteil des Isolationsschutzes.

Der mechanisch relevante Teil des erfindungsgemäßen Fahrzeugleitungsschutzschlauches umfasst einen vorzugsweise scheuerfesten Hüllschlauch. Der Hüllschlauch muss so ausgelegt sein, dass dieser unter Temperatureinwirkung im Gegensatz zu einem Schrumpfschlauch bzw. einem herkömmlichen Scheuerschutzschlauch, wie beispielsweise dem Produkt HFT5000 des Herstellers Raychem, durchmesserstabil ist. Die Temperatur, welcher ein erfindungsgemäßer Hüllschlauch mindestens widerstehen muss, ist größer als die Aufschäumtemperatur des Isolationsmittel und beträgt beispielsweise 140 °C.

Gemäß einer weiteren Ausgestaltungsform des erfindungsgemäßen Fahrzeugleitungsschutzschlauches weist der flexible Hüllschlauch daher zumindest an seiner radialen Außenfläche Eigenschaften auf, welche einen Scheuerschutz beziehungsweise einen Abriebschutz begünstigen. In einer weiteren Ausgestaltungsform ist das Material des Hüllschlauches derart gewählt, dass es sich bei Wärmeeinwirkung nicht zusammenzieht. Das Material des Hüllschlauchs ist Aramid.

Die erfindungsgemäße Aufgabe wird auch gelöst durch eine Fahrzeugleitung, welche zum Leiten von Fluiden vorgesehen ist, wobei diese zumindest abschnittsweise von einem erfindungsgemäßen Fahrzeugschutzschlauch umhüllt ist und wobei das kompakte thermische Isolationsmittel des Fahrzeugschutzschlauchs durch Wärmeeinwirkung bei einer Temperatur, welcher der flexible Hüllschlauch widerstehen kann, aufgeschäumt worden ist. Durch das nachträgliche Aufschäumen ist der zeitlich vorausgegangene Fertigungsprozess in vorteilhafter Weise vereinfacht worden.

Entsprechend einer bevorzugten Variante der erfindungsgemäßen Fahrzeugleitung ist im aufgeschäumten Zustand des kompakten thermischen Isolationsmittels der Raum zwischen der Fahrzeugleitung und dem diese umhüllenden Hüllschlauch vollständig ausgefüllt. Somit ist sowohl eine mittige Anordnung des Fahrzeugschutzschlauches um die Fahrzeugleitung erreicht als auch eine nachhaltige thermische Isolation.

Entsprechend weiterer Ausgestaltungsformen der erfindungsgemäßen Fahrzeugleitung umfasst diese ein typischerweise starres Rohr und/oder einen typischerweise flexiblen Schlauch. Der flexible Hüllschlauch ist erfindungsgemäß auf seiner radialen Innenseite mit einem vorzugsweise ebenfalls flexiblem kompakten Isolationsmaterial versehen, was vor allem relevant beim Einsatz auf Schläuchen ist, welche ihrerseits ebenfalls eine gewisse Flexibilität aufweisen. Für starre Rohrleitungen können der Hüllschlauch und das kompakte thermische Isolationsmaterial weniger flexibel ausgeführt sein.

Gemäß einer weiteren Ausgestaltungsform ist die Fahrzeugleitung zur Leitung eines wärmeführendes Fluids vorgesehen, beispielsweise von Heiz- oder Kühlmittelkreisläufen. Hier ist der gewünschte Effekt der Wärmeisolation besonders groß.

Gemäß einer besonders bevorzugten Erfindungsvariante ist die erfindungsgemäße Fahrzeugleitung in einem vorzugsweise batteriebetriebenen Elektrofahrzeug verbaut. Wie bereits erwähnt, ist die thermische Isolation von Fahrzeugleitungen hier besonders wichtig, um der Batterie des Elektrofahrzeugs möglichst wenig Energie zu Heizzwecken der Fahrgastzelle zu entziehen.

Die erfindungsgemäße Aufgabe wird auch gelöst durch ein Verfahren zur Herstellung eines Schutzes für zum Leiten von Fluiden vorgesehene Fahrzeugleitungen, umfassend folgende Schritte:
- Bereitstellung einer Fahrzeugleitung,
- Bereitstellung eines erfindungsgemäßen Fahrzeugleitungsschutzschlauches,
- zumindest bereichsweise Umhüllung der Fahrzeugleitung mit dem Fahrzeugleitungsschutzschlauch,
- Aufschäumen des kompakten thermischen Isolationsmittels mittels Wärmeeinwirkung bei einer Temperatur, welcher der flexible Hüllschlauch widerstehen kann.

Die erfindungsgemäßen Vorteile, die sich aus dem Verfahren ergeben, insbesondere die vereinfachte Montage durch Überschieben des Fahrzeugleitungsschutzschlauches über eine zu schützende Fahrzeugleitung und nachträgliches Aufschäumen, wurden bereits zuvor erläutert.

In einer besonders bevorzugten Variante des Verfahrens ist das Volumen des kompakten thermischen Isolationsmittels derart bemessen, dass im aufgeschäumten Zustand der Raum zwischen der Fahrzeugleitung und dem diesen umhüllenden Hüllschlauch vollständig ausgefüllt ist. Hierdurch ist sowohl eine mittige Anordnung des Fahrzeugschutzschlauches um die Fahrzeugleitung erreicht als auch deren nachhaltige thermische Isolation.

Weitere vorteilhafte Ausgestaltungsmöglichkeiten sind den weiteren abhängigen Ansprüchen zu entnehmen.

Anhand der in den Zeichnungen dargestellten Ausführungsbeispiele sollen die Erfindung, weitere Ausführungsformen und weitere Vorteile näher beschrieben werden.

Es zeigen:
- Fig. 1: einen exemplarischen Fahrzeugleitungsschutzschlauch (Schichtaufbau),
- Fig. 2: einen exemplarischer Fahrzeugleitungsschutzschlauch (gerollt),
- Fig. 3: eine umhüllte Fahrzeugleitung (erster Zustand) sowie
- Fig. 4: eine umhüllte Fahrzeugleitung (zweiter Zustand).

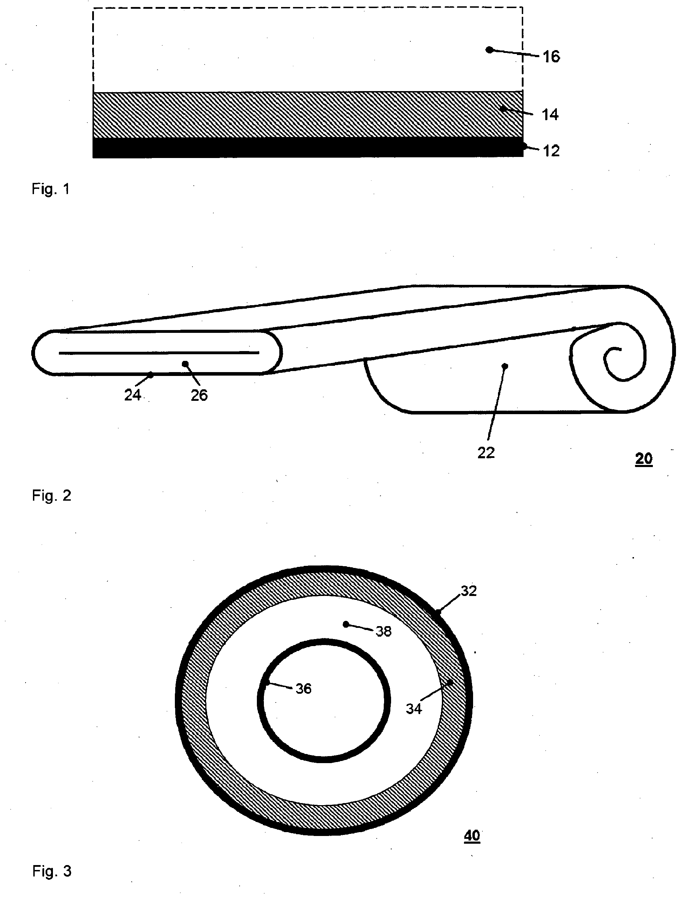

Fig. 1 zeigt einen Schichtaufbau eines exemplarischen Fahrzeugleitungsschutzschlauches 10. Eine äußere Schicht ist durch einen flexiblen Hüllschlauch 12 gebildet, wobei auf der inneren Seite der äußeren Schicht eine Schicht 14 eines aufschäumbaren kompakten thermischen Isolationsmittels befindlich ist. Das Expansionsvolumen, welches durch Aufschäumung der Schicht 14 zusätzlich erzeugt wird, ist mit der Bezugsziffer 16 angedeutet.

Fig. 2 zeigt einen exemplarischer Fahrzeugleitungsschutzschlauch 20 in gerolltem 22 Zustand, wie er beispielsweise in der Produktion von Elektrofahrzeugen zur Verfügung stehen könnte. Der Fahrzeugleitungsschutzschlauch ist plattgedrückt und an seiner im Bild links dargestellten Stirnfläche sind dessen äußerer flexibler Hüllschlauch 24 und eine Schicht kompaktes thermisches Isolationsmittel 26 zu erkennen.

Fig. 3 zeigt eine umhüllte Fahrzeugleitung 30 in einem ersten Zustand, wobei die Umhüllung einen Fahrzeugleitungsschutzschlauch umfasst, welcher seinerseits einen flexiblen Hüllschlauch 32 sowie ein an dessen radialer Innenfläche vorgesehenes kompaktes thermisches Isolationsmittel 34 in nicht aufgeschäumten Zustand umfasst. Um eine Aufschäumbarkeit zu erreichen, kann das thermische Isolationsmittel beispielsweise mit einem Treibmittel versehen sein. Mittig in dem Fahrzeugschutzschlauch ist eine Fahrzeugleitung 36 gezeigt, wobei zwischen radialer Außenfläche der Fahrzeugleitung 36 und radialer Innenfläche der Schicht kompakten thermischen Isolationsmittels 34 ein hohlzylindrischer Raum gebildet ist, dessen Volumen auch dem zusätzlichen Expansionsvolumen 38 des kompakten thermischen Isolationsmittels 34 entspricht.

Zum Aufschäumen des kompakten thermischen Isolationsmittels kann die umhüllte Fahrzeugleitung 30 beispielsweise für eine bestimmte Zeit in einem Ofen einer hohen Temperatur ausgesetzt werden. Durch die Temperatureinwirkung schäumt das Treibmittel das Isolationsmittel 34 zwischen der zu isolierenden Fahrzeugleitung 36 und dem flexiblen Hüllschlauch 32 auf. Der Fertigungsprozess ist sowohl hinsichtlich Aufschiebens des Scheuerschutzes auf die Fahrzeugleitung als auch hinsichtlich der weiteren Verarbeitung in beispielsweise einem Wärmeofen weitestgehend vergleichbar mit dem Aufbringen und Aufschrumpfen eines herkömmlichen Scheuerschutzes.

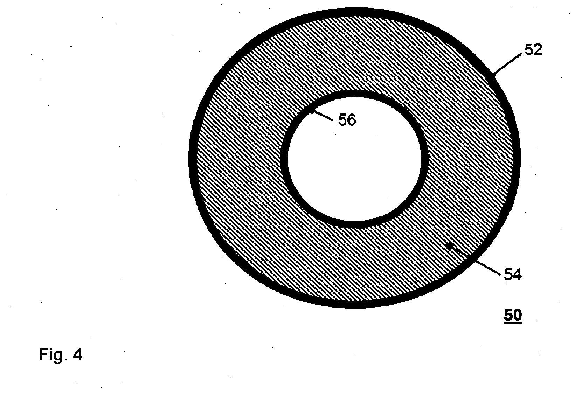

Fig. 4 zeigt eine umhüllte Fahrzeugleitung 40 in einem zweiten Zustand, wobei die Umhüllung einen Fahrzeugleitungsschutzschlauch umfasst, welcher seinerseits einen flexiblen Hüllschlauch 42 sowie ein an dessen radialer Innenfläche vorgesehenes aufgeschäumtes thermisches Isolationsmittel 44 umfasst. Somit ist eine mittig angeordnete zu isolierende Fahrzeugleitung 46 eng umhüllt vom aufgeschäumten Isolationsmittel 44.

## Patentansprüche

1. Fahrzeugleitungsschutzschlauch (10, 20) für zum Leiten von Fluiden vorgesehene Fahrzeugleitungen (36, 46), umfassend
• einen unter Temperatureinwirkung durchmesserstabilen flexiblen Hüllschlauch (12, 24, 32, 42) aus Aramid zur Anordnung um eine Fahrzeugleitung (36, 46),
• ein an dessen radialer Innenseite vorgesehenes kompaktes thermisches Isolationsmittel (14, 26, 34),
wobei das kompakte thermische Isolationsmittel (14, 26, 34), durch Wärmeeinwirkung aufgeschäumt (16, 38, 44) werden kann,
wobei die Temperatur, welcher der flexible Hüllschlauch widerstehen kann, größer ist als die Aufschäumtemperatur des Isolationsmittels

2. Fahrzeugleitung, welche zum Leiten von Fluiden vorgesehen ist, **dadurch gekennzeichnet, dass** diese zumindest abschnittsweise von einem Fahrzeugleitungsschutzschlauch (10, 20) nach Anspruch 1 umhüllt ist und dass das kompakte thermische Isolationsmittel (14, 26, 34) durch Wärmeeinwirkung aufgeschäumt (16, 38, 44) worden ist.

3. Fahrzeugleitung nach Anspruch 2, **dadurch gekennzeichnet, dass** im aufgeschäumten (16, 38, 44) Zustand des kompakten thermischen Isolationsmittels (14, 26, 34) der Raum zwischen der Fahrzeugleitung (36, 46) und dem diese umhüllenden Hüllschlauch (12, 24, 32, 42) vollständig ausgefüllt ist.

4. Fahrzeugleitung nach Anspruch 2 oder 3, **dadurch gekennzeichnet, dass** diese ein Rohr umfasst.

5. Fahrzeugleitung nach Anspruch 2 bis 4, **dadurch gekennzeichnet, dass** diese einen Schlauch umfasst.

6. Fahrzeugleitung nach Anspruch 2 bis 5, **dadurch gekennzeichnet, dass** diese zur Leitung eines wärmeführendes Fluids vorgesehen ist.

7. Fahrzeugleitung nach einem der Ansprüche 2 bis 6, **dadurch gekennzeichnet, dass** diese in einem Elektrofahrzeug verbaut ist.

8. Verfahren zur Herstellung eines Schutzes für zum Leiten von Fluiden vorgesehene Fahrzeugleitungen (36, 46), nach Anspruch 1, umfassend folgende Schritte:
• Bereitstellung einer Fahrzeugleitung (36, 46),
• Bereitstellung eines Fahrzeugleitungsschutzschlauches (10, 20) nach Anspruch 1,
• zumindest bereichsweise Umhüllung der Fahrzeugleitung (36, 46) mit dem Fahrzeugleitungsschutzschlauch (10, 20),
• Aufschäumen (16, 38, 44) des kompakten thermischen Isolationsmittels (14, 26, 34) mittels Wärmeeinwirkung.

9. Verfahren nach Anspruch 8, **dadurch gekennzeichnet, dass** das Volumen des kompakten thermischen Isolationsmittels (14, 26, 34) derart bemessen ist, dass im aufgeschäumten (16, 38, 44) Zustand der Raum zwischen der Fahrzeugleitung (36, 46) und dem diese umhüllenden Hüllschlauch (12, 24, 32, 42) vollständig ausgefüllt ist.

## Claims

1. Vehicle line protection hose (10, 20) for vehicle lines (36, 46) provided for the guidance of fluids, comprising
- a flexible sheathed hose (12, 24, 32, 42) made of aramid, stable in diameter under the influence of temperature, for the disposition about a vehicle line (36, 46),
- a compact thermal insulating means (14, 26, 34) provided on its radial inner side,
wherein the compact thermal insulating means (14, 26, 34) can be foamed (16, 38, 44) under the influence of heat,
wherein the temperature which the flexible sheathed hose can resist is greater than the foaming temperature of the insulating means.

2. Vehicle line which is provided for the guidance of fluids, **characterised in that** this is at least portionally enclosed by a vehicle line protection hose (10, 20) according to claim 1 and that the compact thermal insulating means (14, 26, 34) has been foamed (16, 38, 44) by the influence of heat.

3. Vehicle line according to claim 2, **characterised in that** in the foamed (16, 38, 44) state of the compact thermal insulating means (14, 26, 34) the space between the vehicle line (36, 46) and the sheathed hose (12, 24, 32, 42) enclosing this is completely filled.

4. Vehicle line according to claim 2 or 3, **characterised in that** this includes a pipe.

5. Vehicle line according to claim 2 to 4, **characterised in that** this includes a hose.

6. Vehicle line according to claim 2 to 5, **characterised in that** this is provided for the guidance of a heat-conducting fluid.

7. Vehicle line according to any of claims 2 to 6, **characterised in that** this is installed in an electric vehicle.

8. Method for manufacturing a protection for vehicle lines (36, 46) provided for the guidance of fluids, according to claim 1, comprising following steps:
- provision of a vehicle line (36, 46),
- provision of a vehicle line protection hose (10, 20) according to claim 1,
- at least sectional enclosure of the vehicle line (36, 46) with the vehicle line protection hose (10, 20),
- foaming (16, 38, 44) of the compact thermal insulating means (14, 26, 34) by means of heat influence.

9. Method according to claim 8, **characterised in that** the volume of the compact thermal insulating means (14, 26, 34) is dimensioned such that in the foamed (16, 38, 44) state the space between the vehicle line (36, 46) and the sheathed hose (12, 24, 32, 42) enclosing this is completely filled.

## Revendications

1. Gaine de protection de conduite de véhicule (10, 20) pour des conduites de véhicule (36, 46) prévues pour la conduite de fluides, comprenant
- une gaine enveloppante souple (12, 24, 32, 42) de diamètre stable sous l'effet de la température en aramide pour l'agencement autour d'une conduite de véhicule (36, 46),
- un moyen d'isolation thermique compact (14, 26, 34) prévu au niveau de son côté intérieur radial,
dans laquelle le moyen d'isolation thermique compact (14, 26, 34) peut être moussé (16, 38, 44) par effet de chaleur,
dans laquelle la température, à laquelle la gaine enveloppante souple peut résister, est supérieure à la température de moussage du moyen d'isolation.

2. Conduite de véhicule, laquelle est prévue pour la conduite de fluides, **caractérisée en ce que** celle-ci est enveloppée au moins par section par une gaine de protection de conduite de véhicule (10, 20) selon la revendication 1 et que le moyen d'isolation thermique compact (14, 26, 34) a été moussé (16, 38, 44) par effet de chaleur.

3. Conduite de véhicule selon la revendication 2, **caractérisée en ce qu'**à l'état moussé (16, 38, 44) du moyen d'isolation thermique compact (14, 26, 34), l'espace entre la conduite de véhicule (36, 46) et la gaine enveloppante (12, 24, 32, 42) enveloppant celle-ci est entièrement remplie.

4. Conduite de véhicule selon la revendication 2 ou 3, **caractérisée en ce que** celle-ci comprend un tube.

5. Conduite de véhicule selon la revendication 2 à 4, **caractérisée en ce que** celle-ci comprend une gaine.

6. Conduite de véhicule selon la revendication 2 à 5, **caractérisée en ce que** celle-ci est prévue pour la conduite d'un fluide caloporteur.

7. Conduite de véhicule selon l'une quelconque des revendications 2 à 6, **caractérisée en ce que** celle-ci est montée dans un véhicule électrique.

8. Procédé de production d'une protection pour des conduites de véhicule (36, 46) prévues pour la conduite de fluides, selon la revendication 1, comprenant les étapes suivantes :
- mise à disposition d'une conduite de véhicule (36, 46),
- mise à disposition d'une gaine de protection de conduite de véhicule (10, 20) selon la revendication 1,
- enveloppement au moins par zone de la conduite de véhicule (36, 46) avec la gaine de protection de conduite de véhicule (10, 20),
- moussage (16, 38, 44) du moyen d'isolation thermique compact (14, 26, 34) par effet de chaleur.

9. Procédé selon la revendication 8, **caractérisé en ce que** le volume du moyen d'isolation thermique compact (14, 26, 34) est mesuré de sorte qu'à l'état moussé (16, 38, 44), l'espace entre la conduite de véhicule (36, 46) et la gaine enveloppante (12, 24, 32, 42) enveloppant celle-ci est entièrement remplie.
